# EUROPÄISCHE PATENTANMELDUNG

(11) **EP 3 690 899 A1**
(43) Veröffentlichungstag der Anmeldung: **05.08.2020**
(21) Anmeldenummer: 20153567.1
(22) Anmeldetag: 24.01.2020
(51) Int. Cl.: H01B 7/04, H01R 4/62, H01R 11/00, H01B 1/02, H01B 3/30, H01B 3/44, H01R 35/02

(54) **LEITERANORDNUNG FÜR EINE ELEKTRISCHE ENERGIE- UND/ODER DATENÜBERTRAGUNGSVERBINDUNG**

(30) Priorität: 01.02.2019 DE 102019201339
(71) Anmelder: Deere & Company, Moline, IL 61265 (US)
(72) Erfinder: Dimitrij, Lyfar, 68163 Mannheim (DE)
(74) Vertreter: Dehnhardt, Florian Christopher

(57) **Zusammenfassung**

Eine Leiteranordnung (10) für eine elektrische Energie- und/oder Datenübertragungsverbindung umfasst wenigstens einen Leiterabschnitt (12) mit einem flexiblen Innenleiter (18), wobei der flexible Innenleiter (18) von einem thermoplastischen Hartkunststoffmantel (24) umgeben ist, der durch Erwärmen auf eine durch einen spezifischen Aufweichungspunkt gegebene Grenztemperatur in einen formbaren Zustand versetzbar ist und nach dem Abkühlen wieder erhärtet.

## Beschreibung

Die Erfindung bezieht sich auf eine Leiteranordnung für eine elektrische Energie- und/oder Datenübertragungsverbindung, umfassend wenigstens einen Leiterabschnitt mit einem flexiblen Innenleiter. Derartige Leiteranordnungen zur Energie- und/oder Datenübertragung sind in den unterschiedlichsten Ausführungen bekannt. Zur festen Verlegung finden üblicherweise Kabelhalter oder zusätzliche Führungsrohre Verwendung. Daneben ist bei fest verlegten Energieübertragungsverbindungen auch der Einsatz von starren Massivleitern anstelle von flexiblen Leitern üblich, wobei diese vor einem Einbau in eine jeweils gewünschte Form gebogen werden.

Daneben ist aus der DE 10 2008 035 169 B3 im Hinblick auf eine vereinfachte Montage eine aus flexiblen und starren Abschnitten bestehende Energieversorgungsschiene bekannt.

Es ist Aufgabe der vorliegenden Erfindung, eine Leiteranordnung der eingangs genannten Art hinsichtlich der Erfordernisse an eine feste Verlegung anzupassen.

Diese Aufgabe wird durch eine Leiteranordnung mit den Merkmalen des Patentanspruchs 1 gelöst.

Die erfindungsgemäße Leiteranordnung für eine elektrische Energie- und/oder Datenübertragungsverbindung umfasst wenigstens einen Leiterabschnitt mit einem flexiblen Innenleiter, wobei der flexible Innenleiter von einem thermoplastischen Hartkunststoffmantel umgeben ist, der durch Erwärmen auf eine durch einen spezifischen Aufweichungspunkt gegebene Grenztemperatur T_{g} in einen formbaren Zustand versetzbar ist und nach dem Abkühlen wieder erhärtet.

Nach entsprechendem Erwärmen des wenigstens einen Leiterabschnitts lässt sich die Leiteranordnung daher selbst in unzugänglichen bzw. verbauten Bereichen, wie sie typischerweise in einem Motorraum eines Kraftfahrzeugs vorzufinden sind, problemlos von Hand verlegen. Nach dem Abkühlen behält der wenigstens eine Leiterabschnitt dann die beim Verlegen festgelegte Form bei. Die erfindungsgemäße Leiteranordnung ersetzt nicht nur die Verwendung von vorgebogenen starren Massivleitern, die unter ungünstigen Bauraumbedingungen aufgrund ihrer mangelnden Flexibilität entsprechend schwer handzuhaben sind, sondern erübrigt auch den Einsatz einer übermäßigen Anzahl von Kabelhaltern zur Führung der Leiteranordnung oder eines zusätzlichen Führungsrohrs. Der thermoplastische Hartkunststoffmantel stellt dabei sowohl eine den flexiblen Leiter schützende Außenhülle wie auch ein Stützskelett dar, das den flexiblen Innenleiter in seiner festgelegten Form hält. Die Erwärmung des wenigstens einen Leiterabschnitts kann beispielsweise punktuell an einer gewünschten Biegestelle mittels eines Heißluftgebläses oder aber in seiner Gesamtheit in einem Ofen erfolgen.

Vorteilhafte Weiterbildungen der erfindungsgemäßen Leiteranordnung gehen aus den Unteransprüchen hervor.

Vorzugsweise weist der thermoplastische Hartkunststoffmantel eine Biegefestigkeit von mehr als 50 N/mm² bei einer Betriebstemperatur von 25°C auf. Hierbei kann es sich um Hart-PVC, PA6 oder dergleichen handeln. Der Aufweichungspunkt liegt in einem solchen Fall je nach enthaltenen Zusätzen in etwa bei 80 bis 150 °C. Um zu gewährleisten, dass der wenigstens eine Leiterabschnitt seine festgelegte Form beibehält, sollte die Biegefestigkeit des Hartkunststoffmantels in abgekühltem Zustand den inhärenten Rückstellkräften des flexiblen Innenleiters Rechnung tragen.

Der in dem wenigstens einen Leiterabschnitt verlaufende flexible Innenleiter kann insbesondere derart ausgebildet sein, dass dieser nicht nur in Längsrichtung, sondern auch bezüglich seines Querschnitts deformierbar ist. In diesem Fall ist der wenigstens eine Leiterabschnitt nach entsprechendem Erwärmen und Abkühlen aus einem im Wesentlichen runden in einen abgeflachten Zustand verbringbar, in dem sich dieser beispielsweise durch spaltförmige Bereiche bzw. Engstellen problemlos hindurchführen lässt.

Des Weiteren besteht die Möglichkeit, dass der flexible Innenleiter in wenigstens einem weiteren angrenzenden Leiterabschnitt von einem flexiblen Schutzmantel in Gestalt eines Wellrohrs, Gewebeschlauchs oder dergleichen umgeben ist. Der wenigstens eine weitere Leiterabschnitt dient typischerweise der Anbringung von ein- oder mehrpoligen Steckverbindern oder beliebigen anderen Kontaktierungselementen, zum Beispiel in Gestalt von Hochstromverbindern wie Kabelschuhen oder -ösen. Die Steckverbinder sind insbesondere mittels einer jeweiligen Crimpverbindung mit dem wenigstens einen weiteren Leiterabschnitt elektrisch kontaktiert.

Bei dem flexiblen Innenleiter kann es sich um eine aus einer Vielzahl von blanken Einzeldrähten bestehende Litze handeln. Der flexible Innenleiter kann einadrig oder auch mehradrig ausgebildet sein, wobei jede Ader durch eine zugehörige Litze gebildet ist, die ihrerseits von einer flexiblen Isolierung umgeben ist. Zusätzlich kann ein Metallgeflecht und/oder eine Metallfolie zur Abschirmung gegenüber elektromagnetischen Störfeldern vorgesehen sein.

Die flexible Isolierung bzw. der flexible Schutzmantel kann aus Weich-PVC, PE, TEP, PTFE, Silikon, silikon-beschichteter Glasseide oder dergleichen bestehen. Der Begriff "flexibel" ist in diesem Zusammenhang auf einen für den Dauerbetrieb der betreffenden Leiteranordnung vorgesehenen Temperaturbereich zu beziehen, denn bei hinreichend tiefen Temperaturen verhärten sich die meisten Kunststoffe.

Je nach Anforderungen und Einsatzgebiet der Leiteranordnung kann der flexible Innenleiter aus Kupfer oder Aluminium hergestellt sein. Die Verwendung von Aluminium hat sich aus Gewichts- und Kostengründen insbesondere bei Energieversorgungsverbindungen mit entsprechend großen Leiterquerschnitten bewährt, führt jedoch zu einem erhöhten Mehraufwand bei der elektrischen Kontaktierung. Denkbar ist es daneben auch, dass es sich bei dem flexiblen Innenleiter um eine Glasfaser zur optischen Datenübertragung handelt.

Die erfindungsgemäße Leiteranordnung wird im Folgenden anhand der beigefügten Zeichnungen näher erläutert. Hierbei bezeichnen übereinstimmende Bezugszeichen baulich identische oder bezüglich ihrer Funktion vergleichbare Komponenten. Es zeigen:
- Fig. 1: ein erstes Ausführungsbeispiel der erfindungsgemäßen Leiteranordnung für den Fall einer einadrigen elektrischen Energieübertragungsverbindung,
- Fig. 2: eine Schnittdarstellung der erfindungsgemäßen Leiteranordnung gemäß Fig. 1,
- Fig. 3: die in Fig. 1 dargestellte erfindungsgemäße Leiteranordnung nach dem Erwärmen und Informbringen,
- Fig. 4: ein zweites Ausführungsbeispiel einer erfindungsge-mäßen Leiteranordnung für den Fall einer mehradrigen elektrischen Datenübertragungsverbindung, und
- Fig. 5: eine Querschnittsdarstellung der in Fig. 4 wiederge-gebenen erfindungsgemäßen Leiteranordnung.

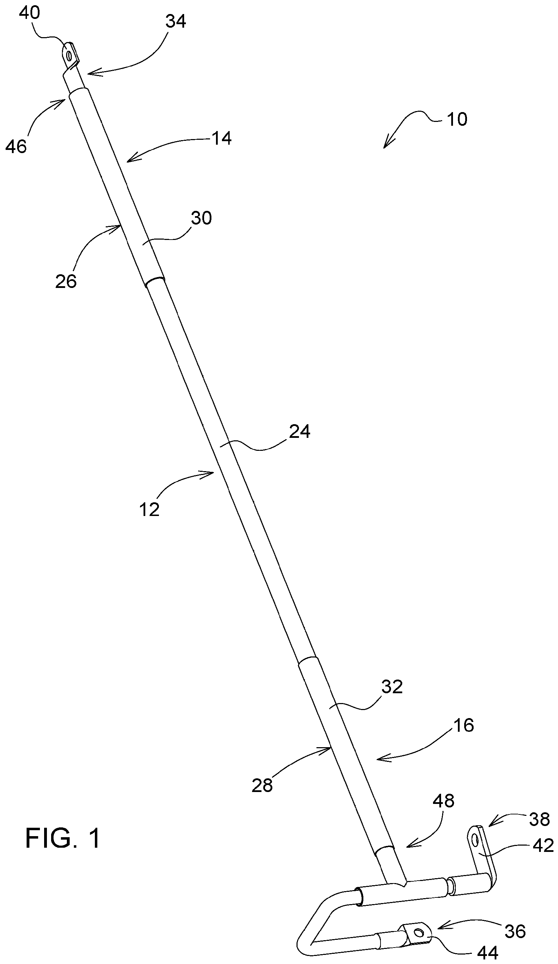

Fig. 1 zeigt ein erstes Ausführungsbeispiel einer erfindungsgemäßen Leiteranordnung für den Fall einer elektrischen Energieübertragungsverbindung.

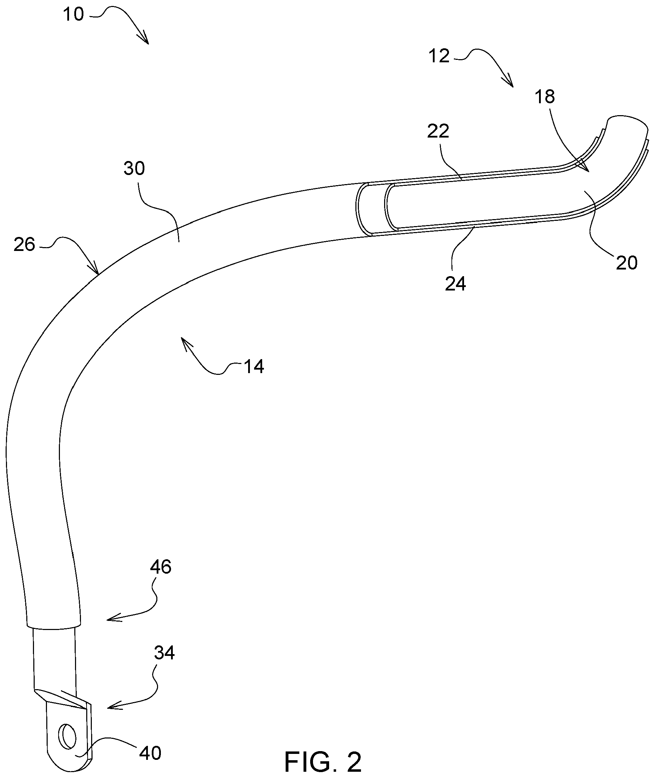

Die Leiteranordnung 10 umfasst einen zentralen ersten Leiterabschnitt 12 sowie daran angrenzende äußere zweite und dritte Leiterabschnitte 14, 16. Wie aus der Schnittdarstellung der Leiteranordnung 10 in Fig. 2 ersichtlich ist, verläuft innerhalb der Leiterabschnitte 12, 14 und 16 ein durchgehender flexibler Innenleiter 18. Bei dem flexiblen Innenleiter 18 handelt es sich um eine aus einer Vielzahl von blanken Einzeldrähten bestehende Kupferlitze 20. Im vorliegenden Fall ist der flexible Innenleiter 18 einadrig ausgebildet und von einer flexiblen Isolierung 22 umgeben. Die flexible Isolierung 22 besteht aus Weich-PVC, PE, TEP, PTFE, Silikon oder silikon-beschichteter Glasseide.

Der flexible Innenleiter 18 ist im Bereich des zentralen ersten Leiterabschnitts 12 von einem thermoplastischen Hartkunststoffmantel 24 umgeben. Der thermoplastische Hartkunststoffmantel 24 weist eine Biegefestigkeit von mehr als 50 N/mm² bei einer Betriebstemperatur von 25 °C auf. Hierbei handelt es sich um Hart-PVC, PA6 oder dergleichen.

Des Weiteren ist der flexible Innenleiter 18 in dem äußeren zweiten und dritten Leiterabschnitt 14, 16 von einem flexiblen Schutzmantel 26, 28 in Gestalt eines Wellrohrs 30, 32 umgeben. Der flexible Schutzmantel 26, 28 besteht aus Weich-PVC, PE, TEP, PTFE, Silikon oder silikon-beschichteter Glasseide. Alternativ kann anstelle eines Wellrohrs 30, 32 auch ein Gewebeschlauch oder dergleichen vorgesehen sein. An dem äußeren zweiten bzw. dritten Leiterabschnitt 14, 16 sind mehrere Kontaktierungselemente 34, 36, 38 angebracht, bei denen es sich vorliegend um als Kabelösen 40, 42, 44 ausgebildete Hochstromverbinder handelt. Diese sind mittels einer jeweiligen Crimpverbindung 46, 48 mit dem äußeren zweiten bzw. dritten Leiterabschnitt 14, 16 elektrisch kontaktiert.

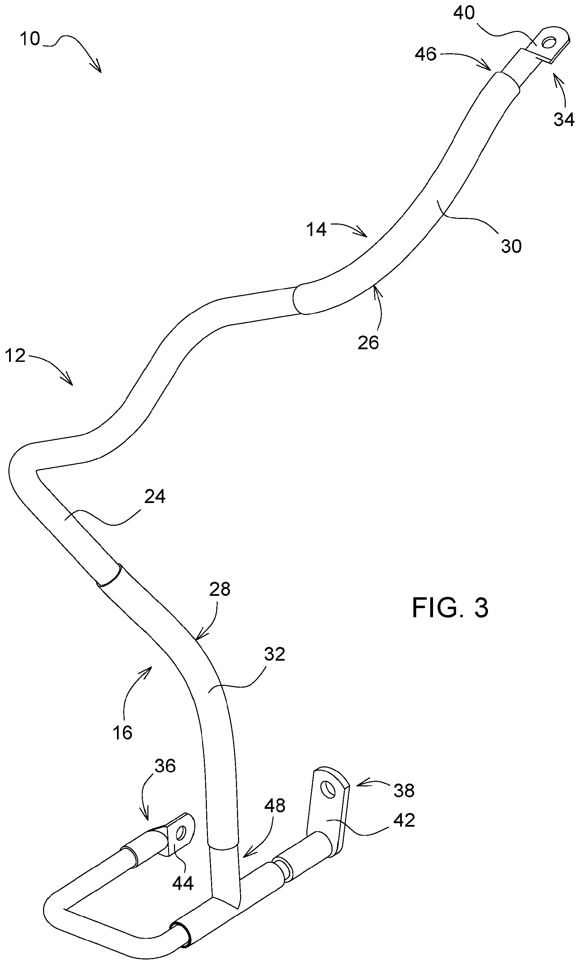

Der im Bereich des zentralen ersten Leiterabschnitts 12 vorgesehene thermoplastische Hartkunststoffmantel 24 lässt sich durch Erwärmen auf eine durch einen spezifischen Aufweichungspunkt gegebene Grenztemperatur T_{g} in einen formbaren Zustand versetzen. Die Erwärmung des zentralen ersten Leiterabschnitts 12 erfolgt punktuell an einer gewünschten Biegestelle mittels eines Heißluftgebläses oder aber in seiner Gesamtheit in einem Ofen. Anschließend lässt sich die Leiteranordnung 10 zum Verlegen beispielsweise innerhalb eines Motorraums eines Kraftfahrzeugs von Hand in eine gewünschte Form bringen. Nach dem Abkühlen erhärtet bzw. erstarrt der thermoplastische Hartkunststoffmantel 24 wieder, sodass der zentrale erste Leiterabschnitt 12 seine - beispielhaft in Fig. 3 dargestellte - Form beibehält.

Der thermoplastische Hartkunststoffmantel 24 stellt dabei sowohl eine den flexiblen Innenleiter 18 schützende Außenhülle wie auch ein Stützskelett dar, das den flexiblen Innenleiter 18 in seiner festgelegten Form hält.

Der Aufweichungspunkt des thermoplastischen Hartkunststoffmantels 24 liegt je nach enthaltenen Zusätzen in etwa bei 80 bis 150 °C.

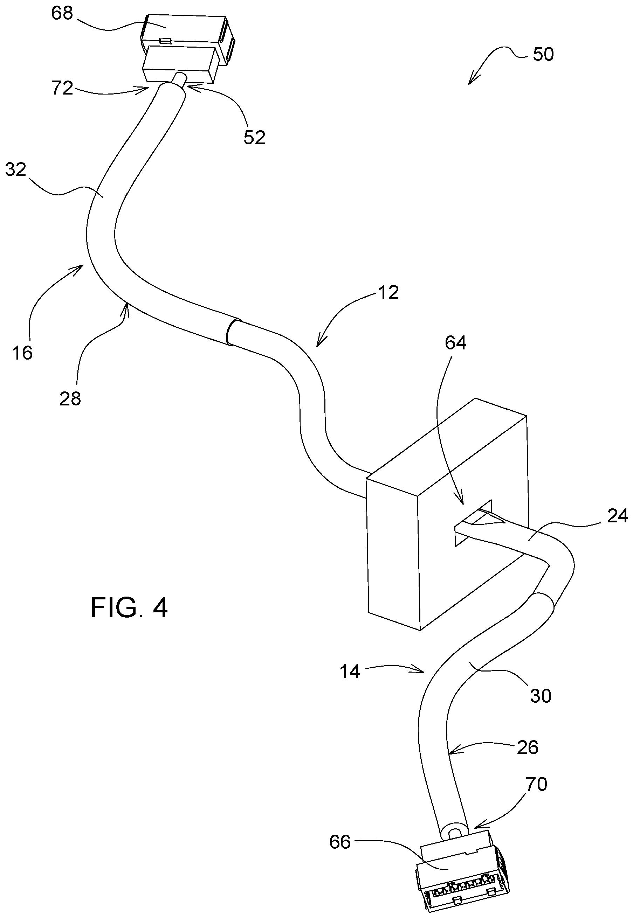

Fig. 4 ein zweites Ausführungsbeispiel einer erfindungsgemäßen Leiteranordnung für den Fall einer elektrischen Datenübertragungsverbindung.

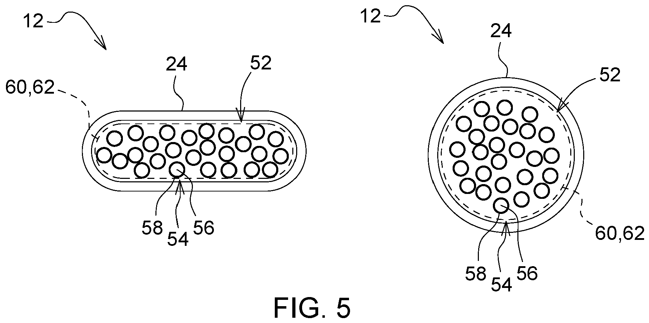

Die Leiteranordnung 50 der Datenübertragungsverbindung in Fig. 4 unterscheidet sich von derjenigen der Energieübertragungsverbindung des in Fig. 1 wiedergegebenen ersten Ausführungsbeispiels dahingehend, dass der flexible Innenleiter 52 gemäß Fig. 5 einen mehradrigen Aufbau aufweist. Jede Ader 54 ist durch eine zugehörige Kupferlitze 56 gebildet, die ihrerseits von einer flexiblen Isolierung 58 umgeben ist. Zusätzlich ist ein in Fig. 5 angedeutetes Metallgeflecht 60 und/oder eine Metallfolie 62 zur Abschirmung gegenüber elektromagnetischen Störfeldern vorgesehen.

Darüber hinaus ist der in dem zentralen ersten Leiterabschnitt 12 verlaufende flexible Innenleiter 52 derart ausgebildet, dass dieser nicht nur in Längsrichtung, sondern auch bezüglich seines in Fig. 5 dargestellten Querschnitts deformierbar ist. Dies wird durch ausreichend lose Bündelung der einzelnen Adern 54 innerhalb des umgebenden thermoplastischen Hartkunststoffmantels 24 erreicht. In diesem Fall ist der zentrale erste Leiterabschnitt 12 nach entsprechendem Erwärmen und Abkühlen aus einem im Wesentlichen runden in einen abgeflachten Zustand verbringbar, in dem sich dieser durch einen in Fig. 4 wiedergegebenen spaltförmigen Bereich 64 oder eine vergleichbare Engstelle hindurchführen lässt.

Dem mehradrigen Aufbau des flexiblen Innenleiters 52 entsprechend sind an den äußeren zweiten und dritten Leiterabschnitten 14, 16 mehrpolige Steckverbinder 66, 68 angebracht. Die Steckverbinder 66, 68 sind hierbei mit den äußeren zweiten und dritten Leiterabschnitten 14, 16 über jeweilige Crimpverbindungen 70, 72 elektrisch kontaktiert.

Der Vollständigkeit halber sei angemerkt, dass die Verwendung der Leiteranordnung 10 bzw. 50 nicht auf den Fahrzeugbereich beschränkt ist. Vielmehr ist deren Einsatz auch in beliebigem anderen Zusammenhang, so zum Beispiel im Apparate- oder Anlagenbau, vorstellbar.

## Patentansprüche

1. Leiteranordnung für eine elektrische Energie- und/oder Datenübertragungsverbindung, umfassend wenigstens einen Leiterabschnitt (12) mit einem flexiblen Innenleiter (18, 52), wobei der flexible Innenleiter (18, 52) von einem thermoplastischen Hartkunststoffmantel (24) umgeben ist, der durch Erwärmen auf eine durch einen spezifischen Aufweichungspunkt gegebene Grenztemperatur (T_{g}) in einen formbaren Zustand versetzbar ist und nach dem Abkühlen wieder erhärtet.

2. Leiteranordnung nach Anspruch 1, **dadurch gekennzeichnet, dass** der thermoplastische Hartkunststoffmantel (24) eine Biegefestigkeit von mehr als 50 N/mm² bei einer Betriebstemperatur von 25°C aufweist.

3. Leiteranordnung nach Anspruch 1 oder 2, **dadurch gekennzeichnet, dass** der in dem wenigstens einen Leiterabschnitt (12) verlaufende flexible Innenleiter (52) derart ausgebildet ist, dass dieser bezüglich seines Querschnitts deformierbar ist.

4. Leiteranordnung nach wenigstens einem der Ansprüche 1 bis 3, **dadurch gekennzeichnet, dass** der flexible Innenleiter (18, 52) in wenigstens einem weiteren angrenzenden Leiterabschnitt (14, 16) von einem flexiblen Schutzmantel (26, 28) umgeben ist.

5. Leiteranordnung nach wenigstens einem der Ansprüche 1 bis 4, **dadurch gekennzeichnet, dass** der flexible Innenleiter (18, 52) einadrig oder mehradrig ausgebildet ist.

6. Leiteranordnung nach wenigstens einem der Ansprüche 1 bis 5, **dadurch gekennzeichnet, dass** der flexible Innenleiter (18, 52) aus Kupfer oder Aluminium hergestellt ist.
